# EUROPÄISCHE PATENTSCHRIFT

(11) **EP 2 247 385 B1**
(45) Veröffentlichungstag und Bekanntmachung des Hinweises auf die Patenterteilung: **05.11.2014**
(21) Anmeldenummer: 09711627.1
(22) Anmeldetag: 17.02.2009
(51) Int. Cl.: B01J 37/02, B01J 35/04, B01J 35/00

(54) **VERFAHREN ZUR BESCHICHTUNG EINES DIESELPARTIKELFILTERS UND DAMIT HERGESTELLTES DIESELPARTIKELFILTER**
METHOD FOR COATING A DIESEL PARTICLE FILTER AND DIESEL PARTICLE FILTERS PRODUCED THEREBY
PROCÉDÉ D'APPLICATION D'UN REVÊTEMENT SUR UN FILTRE À PARTICULES DIESEL ET FILTRE À PARTICULES DIESEL FABRIQUÉ PAR CE PROCÉDÉ

(30) Priorität: 21.02.2008 DE 102008010388
(43) Veröffentlichungstag der Anmeldung: 10.11.2010
(73) Patentinhaber: Umicore AG & Co. KG, 63457 Hanau-Wolfgang (DE)
(72) Erfinder: JESKE, Gerald, 63543 Neuberg (DE); PFEIFER, Marcus, 42719 Solingen (DE); SCHNEIDER, Wolfgang, 63517 Rodenbach (DE); DORNHAUS, Franz, 63110 Rodgau (DE); MUELLER, Ralf, 36391 Sinntal (DE); SCHIFFER, Michael, 63450 Hanau (DE)
(74) Vertreter: Wittrock, Meike
(86) Internationale Anmeldenummer: PCT/EP2009/051850
(87) Internationale Veröffentlichungsnummer: WO 2009/103699

(56) Entgegenhaltungen:
- EP-A- 1 721 665
- EP-A1- 1 273 344
- DE-A1-102004 020 259
- DE-A1-102004 040 549
- DE-A1-102004 040 550
- DE-A1-102004 040 551
- US-A1- 2001 026 838
- US-A1- 2006 057 046

## Beschreibung

Die Erfindung betrifft ein Verfahren zur Beschichtung eines Dieselpartikelfilters mit einer katalytisch aktiven Beschichtung zur Reinigung der Abgase von Dieselmotoren, wobei eine zeolithhaltige Schicht über die gesamte Länge des Partikelfilters gleichmäßig und eine weitere, zeolithfreie Schicht nur in einer Eingangszone zur Erhöhung der Edelmetallkonzentration in dieser Zone aufgebracht wird.

Partikelfilter sind in der Lage, partikelförmige Abgasbestandteile, besonders Rußpartikel, aus dem Abgas von Verbrennungsmotoren herauszufiltern und so deren Ausstoß in die Atmosphäre zu verhindern. Die vorliegende Erfindung befaßt sich besonders mit der Verwendung von sogenannten Wandflußfiltern für diesen Zweck. Wandflußfilter bestehen üblicherweise aus keramischen Werkstoffen wie z.B. Siliziumkarbid, Corderit, Aluminiumtitanat oder Mullit. Mit diesen Filtern werden Filtrationsgrade von mehr als 95 % erreicht.

Wandflußfilter besitzen in der Regel eine zylindrische Form mit zwei Stirnflächen und einer Mantelfläche und werden von der ersten Stirnfläche zur zweiten Stirnfläche von einer Vielzahl von im wesentlichen parallel zur Zylinderachse liegenden Strömungskanälen für die Abgase der Dieselmotoren durchzogen. Die Querschnittsform der Wandflußfilter hängt von den Einbauerfordernissen am Kraftfahrzeug ab. Weit verbreitet sind Filterkörper mit rundem Querschnitt, elliptischem oder dreieckförmigem Querschnitt. Die Strömungskanäle weisen meist einen quadratischen, oder hexagonalen Querschnitt auf und sind in einem engen Raster über den gesamten Querschnitt der Filterkörper angeordnet. Je nach Anwendungsfall variiert die Kanal- beziehungsweise Zelldichte der Strömungskanäle zwischen 10 und 140 cm⁻². Die Dicke der Kanalwände zwischen zwei benachbarten Strömungskanälen beträgt typischerweise je nach Zelldichte 0,1 bis 0,3 mm.

Zur Ausbildung der Filterwirkung sind die Strömungskanäle wechselseitig an der ersten und zweiten Stirnfläche verschlossen. Entsprechend der Anordnung des Filters im Abgasstrom des Dieselmotors bildet eine Stirnfläche die Eintrittsstirnfläche und die zweite Stirnfläche die Austrittsstirnfläche für das Abgas. Die an der Eintrittsseite offenen Strömungskanäle bilden die Eintrittskanäle und die an der Austrittsseite offenen Strömungskanäle bilden die Austrittskanäle. Ein- und Austrittskanäle sind abwechselnd benachbart und werden durch die Kanalwände zwischen ihnen voneinander getrennt.

Bei seinem Weg durch das Filter muß das Abgas von den Eintrittskanälen durch die Kanalwände zwischen Ein- und Austrittskanälen hindurch in die Austrittskanäle des Filters hinüberwechseln. Zu diesem Zweck weist das Material, aus welchem die Wandflußfilter aufgebaut sind, eine offenporige Porosität auf. Bevorzugt werden Wandflußfilter eingesetzt, deren Porosität zwischen 30 und 95 % liegt und deren Poren mittlere Durchmesser zwischen 10 und 50 µm aufweisen. Bevorzugt beträgt die Porosität zwischen 45 bis 90 %. Demgegenüber liegt die Porosität konventioneller, keramischer Durchfluß-Wabenkörper mit etwa 30 % am unteren Ende des Porositätsbereichs von Wandflußfiltern. Noch deutlicher ist der Unterschied beim mittleren Porendurchmesser, der bei konventionellen Durchfluß-Wabenkörpern nur bei etwa 4 bis 5 µm liegt.

Die eigentliche Herausforderung beim Betreiben eines Partikelfilters im Abgas eines Verbrennungsmotors ist jedoch nicht die Filtration der Rußpartikel, sondern die periodische Regeneration der eingesetzten Filter. Da die zum Zünden und Verbrennen des Rußes mit Sauerstoff erforderlichen Temperaturen von mehr als 550 °C in modernen PKW Dieselmotoren üblicherweise nur im Vollastbetrieb erreicht werden können, sind zusätzliche Maßnahmen zur Oxidation der gefilterten Rußpartikel zwingend erforderlich, um ein Verstopfen des Filters durch Ruß zu verhindern. Zu diesem Zweck kann das Filter mit einer Katalysatorschicht beschichtet werden, die in der Lage ist, die Rußzündtemperatur herabzusetzen.

Da die Absenkung der Rußzündtemperatur durch katalytische Maßnahmen im allgemeinen nicht ausreicht, um eine vollständige Regeneration des Filters in allen Betriebszuständen des Motors zu gewährleisten, wird in der heutigen Praxis üblicherweise auf eine Kombination von passiven und aktiven Maßnahmen zurückgegriffen. Besonders bewährt hat sich die Kombination des Partikelfilters mit einem stromaufwärts angeordneten Oxidatiönskatalysator. Durch eine Nacheinspritzung von zusätzlichem Kraftstoff in Kombination mit anderen motorischen Maßnahmen (wie z.B. Androsselung) gelangen unverbrannter Kraftstoff und Kohlenmonoxid auf den Dieseloxidationskatalysator und werden dort katalytisch zu Kohlendioxid und Wasser umgesetzt. Durch die dabei freiwerdende Reaktionswärme werden das Abgas und damit auch das nachgeschaltete Partikelfilter aufgeheizt. In Kombination mit einer Absenkung der Rußzündtemperatur durch eine katalytische Beschichtung des Filters oder auch durch den Einsatz von Kraftstoffadditiven kann die erforderliche Nacheinspritzmenge reduziert und das Filter nahezu an jedem Betriebspunkt im Kennfeld des Motors regeneriert werden.

Bei neuen Abgasnachbehandlungssystemen werden die Filter möglichst nah hinter dem Motor eingebaut, um eine schnelle Aufheizung der Filter zu gewährleisten. Wegen des beschränkten Bauraumes und zur Verminderung der Kosten wird der Oxidationskatalysator in diesen Fällen teilweise oder komplett auf dem Filter aufgebracht. Der Oxidationskatalysator auf dem Filter muß zur Einhaltung der gesetzlich vorgegebenen Grenzwerte für Kohlenmonoxid (CO) und Kohlenwasserstoffe (HC) über die geforderte Laufleistung ein entsprechend hohes Oxidationspotential verfügen. Daneben muß er zusätzlich über die gesamte Laufzeit in der Lage sein, die während einer aktiven Filterregeneration nacheingespritzten Kohlenwasserstoffe umzusetzen, um so die zur Erreichung der Rußzündtemperatur erforderliche Exothermie zu erzeugen. Darüber hinaus muß die katalytisch aktive Beschichtung für den motornahen Einsatz eines solchen Filters eine hohe thermische Stabilität aufweisen.

Bis heute werden für Diesel-PKW nahezu ausschließlich Filterbeschichtungen mit Platin eingesetzt. Beschichtungen mit Platin und Palladium sind ebenfalls bekanntgeworden (siehe DE 10 2004 040 549 A1 der Anmelderin). Beschichtungen mit Platin und Palladium zeichnen sich durch eine sehr gute Temperaturstabilität aus, verfügen jedoch über eine geringere Frischaktivität als katalytische Beschichtungen mit Platin. Prinzipiell sind platin- und palladiumhaltige Beschichtungen bereits seit geraumer Zeit beschrieben.

Gemäß der DE 10 2004 040 549 A1 der Anmelderin können für die Beschichtung der Wandflußfilter mit einem Katalysator Beschichtungssuspensionen verwendet werden, die katalytisch aktive Edelmetalle auf hochoberflächigen, festen Trägermaterialien enthalten. Um den Abgasgegendruck durch die Beschichtung zu minimieren, wird empfohlen, die Katalysatorschichten in die Poren der Kanalwände der Wandflußfilter einzubringen. Hierzu werden gemäß der DE 10 2004 040 549 A1 die Beschichtungssuspensionen vor der Beschichtung einer besonderen Mahlung unterzogen. Die Mahlung wird dabei so geführt, daß die maximale Größe der Trägerpartikel in der Suspension kleiner als 10 µm ist. Dies ist in hinreichendem Maße erfüllt, wenn die mittlere Partikelgröße d₅₀ durch die Mahlung auf unter 2 µm vermindert wird. Der entsprechende d₉₀-Durchmesser liegt dann erfahrungsgemäß unter 5 µm. Die Bezeichnung d₅₀ (d₉₀) bedeutet hier, daß das Volumen der Partikel mit Teilchengrößen unterhalb von d₅₀ (d₉₀) sich zu 50 % (90 %) des Volumens aller Partikel addiert. Diese geringe Partikelgröße gewährleistet, daß die Trägermaterialien fast ausschließlich in den Poren des Filtermaterials abgelagert werden. Weitere Verfahren zur Beschichtung von Wandflußfiltern werden in den Patentanmeldungen der Anmelderin DE 10 2004 040 551 A1 und DE 10 2004 040 550 A1 beschrieben.

Von den Erfindern wurde versucht, die in der DE 10 2004 040 549 A1 beschriebenen Platin/Palladium-Beschichtungen mit einer zeolithhaltigen Beschichtung zur Verbesserung der Speicherfähigkeit für Kohlenwasserstoffe zu kombinieren, um die während Betriebsphasen eines Dieselmotors mit geringen Abgastemperaturen emittierten unverbrannten Kohlenwasserstoffe aus dem Dieselkraftstoff zu speichern und sie bei höheren Abgastemperaturen wieder zu desorbieren und an den katalytisch aktiven Edelmetallen der übrigen Katalysatorbeschichtung umzusetzen. Zu diesem Zweck wurde zunächst die zeolithhaltige Katalysatorschicht von der Eintrittseite der Wandflußfilter gemäß den in den Patentanmeldungen DE 10 2004 040 551 A1 und DE 10 2004 040 550 A1 beschriebenen Verfahren über die gesamte Länge des Wandflußfilters aufgebracht. Durch die feine Vermahlung der Feststoffe in der Beschichtungssuspension wurde sichergestellt, daß das Katalysatormaterial im wesentlichen in die Poren des Wandflußfilters eingelagert wurden. Anschließend wurde von der Eintrittsseite des Wandflußfilters aus ein Platin/Palladium-Katalysator nur auf einem bestimmten Bruchteil der Länge des Filters in die Poren eingebracht, um im Eingangsbereich die katalytische Aktivität des Filters zu erhöhen.

Leider zeigte sich bei Stoßtests, daß sich geringe Mengen der katalytischen Beschichtung vom Filter lösten. Ablösungen traten insbesondere auf bei Beladung des Filters mit Zeolithen in Konzentrationen von mehr als 10 g/l Filtervolumen. Es ist daher Aufgabe der vorliegenden Erfindung ein Verfahren zur Beschichtung eines Dieselpartikelfilters mit einer katalytisch aktiven Beschichtung zur Reinigung der Abgase von Dieselmotoren anzugeben, wobei eine zeolithhaltige Schicht über die gesamte Länge des Partikelfilters gleichmäßig und eine weitere, zeolithfreie Schicht nur in einer Eingangszone zur Erhöhung der Edelmetallkonzentration in dieser Zone aufgebracht wird. Das Verfahren soll eine verbesserte Haftfestigkeit der Beschichtung besonders bei hohen Beschichtungskonzentrationen liefern.

Diese Aufgabe wird durch ein Verfahren zur Beschichtung eines Dieselpartikelfilters mit einer katalytisch aktiven Beschichtung gelöst, wobei eine zeolithhaltige Schicht über die gesamte Länge des Partikelfilters gleichmäßig und ein weiterer, zeolithfreier Edelmetallkatalysator nur in einer Eingangszone zur Erhöhung einer Edelmetallkonzentration in dieser Zone in die Poren des Filtermaterials eingebracht werden. Das Dieselpartikelfilter liegt in Form eines zylindrischen Wandflußfilters mit einer Zylinderachse vor, das eine Eintritts-Stirnfläche, eine Austritts-Stirnfläche sowie eine Länge L des Filterkörpers aufweist.

Im wesentlichen zeichnet sich das Verfahren durch eine Änderung der Beschichtungsreihenfolge und der Beschichtungsrichtung aus. Es wurde gefunden, daß Beschichtungsablösungen bei Stoßtests weitgehend vermieden werden können, wenn zuerst der Edelmetall-Katalysator von der Eingangsseite des Filters bis zu einem gewünschten Bruchteil der Gesamtlänge des Filters in die Poren des Filters eingebracht wird. Die zeolithhaltige Beschichtung wird dann von der Ausgangsseite des Filters über die gesamte Länge des Filters ebenfalls in die Poren des Filtermaterials eingebracht.

Im einzelnen umfaßt das Verfahren die folgenden Verfahrensschritte:
a) senkrechtes Ausrichten der Achse des Filterkörpers mit der Eintritts-Stirnfläche nach unten,
b) Einpumpen einer ersten, zeolithfreien Beschichtungssuspension durch die Eintritts-Stirnfläche bis zu einer vorbestimmten Höhe H, und Absaugen der Beschichtungssuspension nach unten,
c) Drehen des Filterkörpers um eine Achse senkrecht zur Zylinderachse um 180 °,
d) Einpumpen einer zweiten, zeolithhaltigen Beschichtungssuspension durch die nun unten liegende Austritts-Stirnfläche in das Filtersubstrat bis zur oben liegenden Eintritts-Stirnfläche und Absaugen oder Auspumpen der Beschichtungssuspension nach unten und
e) Trocknen und Kalzinieren der Beschichtung,
wobei beide Beschichtungssuspensionen vor dem Beschichten so fein vermahlen werden, daß die Partikel der Feststoffe einen Durchmesser d₉₀ kleiner als 5 µm und einen Feststoffgehalt von weniger als 25 Gew.-% aufweisen.

Das mit dem Verfahren zu beschichtende Wandflußfilter besteht bevorzugt aus einem keramischen Material wie z.B. Siliziumkarbid, Corderit, Aluminiumtitanat oder Mullit mit einer offenporigen Struktur, einer Porosität zwischen 40 und 80 % und einem mittleren Porendurchmesser zwischen 9 und 30 µm.

Durch das Beschichtungsverfahren sollen die in den Beschichtungssuspensionen enthaltenen Katalysatormaterialien in die Poren der Kanalwände des Wandflußfilters eingebracht werden. Zu diesem Zweck werden die in den Beschichtungssuspensionen suspendierten festen Katalysatormaterialien vor dem Beschichten durch Mahlen soweit zerkleinert, daß die Partikel der Feststoffe einen Durchmesser d₉₀ kleiner als 5 µm aufweisen. Außerdem wird die Konzentration der Katalysatormaterialien in den Beschichtungssuspensionen auf maximal 25 Gew.-% bezogen auf das Gesamtgewicht einer Beschichtungssuspension begrenzt. Durch diese Maßnahme sind die Beschichtungssuspensionen relativ dünnflüssig, so daß sie beim Einpumpen in die Filtersubstrate von unten durch die offenen Poren der Kanalwände von den Eintrittskanälen in die Austrittskanäle übertreten können. Die Beschichtungssuspension steigt also in den Ein-und Austrittskanälen gleichzeitig in die Höhe. Ist die gewünschte Beschichtungshöhe erreicht, wird die Beschichtungssuspension wieder nach unten aus dem Filtersubstrat herausgepumpt oder herausgesaugt. Dabei lagern sich die Katalysatormaterialien in den Poren der Kanalwände ab. Durch die geringe Feststoffkonzentration der Beschichtungssuspensionen wird weitgehend verhindert, daß die Zugänge zu den Poren in den Kanalwänden durch die Feststoffpartikel verstopft werden und sich eine auf den Kanalwänden liegende Beschichtung ausbildet.

Die erste, zeolithfreie Beschichtungssuspension wird ausgehend von der Eingangsseite des Filters auf einer Länge H des Filters aufgebracht, die 5 bis 80 % der Gesamtlänge L des Filtersubstrates betragen kann, bevorzugt 10 bis 50 %. Sie enthält mindestens ein oder mehrere Platingruppenmetalle, bevorzugt eine Kombination von Platin und Palladium mit einem Gewichtsverhältnis von Platin zu Palladium von 1 : 10 bis 20 : 1, bevorzugt von 1 : 1 bis 10 : 1, insbesondere 2 : 1. Als Trägermaterialien für die Platingruppenmetalle eignen sich Aluminiumoxid, Siliziumdioxid, Titandioxid, Zirkonoxid, Ceroxid und Mischungen oder Mischoxide davon, jedoch werden keine Zeolithe als Träger verwendet. Die Konzentration der Platingruppenmetalle auf den Trägermaterialien liegt bevorzugt zwischen 1 und 20, bevorzugt zwischen 5 und 15 Gew.-%, bezogen auf das Gesamtgewicht der Trägermaterialien und Platingruppenmetalle. Gute Ergebnisse werden mit einer Konzentration der Platingruppenmetalle auf diesen Trägermaterialien von 10 Gew.-% erzielt. Im fertigen Wandflußfilter sollte die Beladungsmenge dieser ersten Beschichtung so gewählt werden, daß die Konzentration der Platingruppenmetalle bezogen auf das Volumen des Wandflußfilters zwischen 0,5 bis 5, bevorzugt zwischen 1 und 3 g/l, liegt.

Die Trägermaterialien können durch Dotierung mit Seltenerdoxiden, Erdalkalioxiden oder Siliziumdioxid thermisch stabilisiert sein. So wird zum Beispiel bei Aluminiumoxid durch Dotierung mit Bariumoxid, Lanthanoxid oder Siliziumdioxid die Umwandlungstemperatur von y- zu α-Aluminiumoxid von ca. 950 auf bis zu 1100 °C erhöht. Die Konzentration der Dotierungselemente berechnet als Oxid und bezogen auf das Gesamtgewicht des stabilisierten Aluminiumoxids beträgt dabei üblicherweise 1 bis 40 Gew.-%. Bei Verwendung von Ceroxid als Trägermaterial ist es vorteilhaft Cer/Zirkon-Mischoxide einzusetzen, da diese in der Regel eine höhere Temperaturstabilität besitzen als das reine Ceroxid. Die Stabilität der Cer/Zirkon-Mischoxide kann durch Dotierung mit Praseodymoxid oder Neodymoxid noch weiter verbessert werden. Darüber hinaus verfügen Cer/Zirkon-Mischoxide auch über vorteilhafte Sauerstoffspeichereigenschaften, sowohl was die maximale Saustoffspeicherkapazität als auch die Kinetik der Sauerstoffeinspeicherung und -freisetzung betrifft.

Die zweite Beschichtungssuspension enthält Zeolithe. Bevorzugt sind die Zeolithe ausgewählt aus der Gruppe bestehend aus Mordenit, Silicalit, Y-Zeolith, ZSM-5 Zeolith und beta-Zeolith oder Mischungen davon, wobei die Zeolithe ein Molverhältnis (Modul) von Siliziumdioxid zu Aluminiumoxid zwischen 10 und 400 aufweisen. Zeolithe mit einem Modul über 10 sind erfahrungsgemäß ausreichend stabil gegenüber den sauren Komponenten des Abgases und den maximalen Abgastemperaturen. Während Betriebsphasen des Motors mit niedriger Abgastemperatur unterhalb von ca. 200 °C speichern die Zeolithe die im Abgas enthaltenen Kohlenwasserstoffe. Dies ist wichtig, da bei diesen niedrigen Abgastemperaturen eine Oxidation der Kohlenwasserstoffe an den aktiven Edelmetallzentren des Katalysators nicht möglich ist. Solche Betriebsphasen treten bei modernen PKW-Dieselmotoren sowohl während eines Kaltstarts als auch während Leerlaufphasen sowie im Stadtverkehr auf. Bei Temperaturen oberhalb von etwa 200 °C überwiegt dagegen die Desorption der Kohlenwasserstoffe. Bei diesen höheren Katalysatortemperaturen können jedoch die aus den Speicherkomponenten freigesetzten Kohlenwasserstoffe an den aktiven Zentren des Katalysators zu Kohlendioxid und Wasser umgesetzt werden.

Prinzipiell nimmt die Speicherkapazität für Kohlenwasserstoffe mit steigender Menge an Zeolithen zu. Die maximal einsetzbare Menge an Zeolithen hängt jedoch stark von der Porosität und dem mittleren Porendurchmesser des verwendeten Wandflußfilters ab. Übliche Zeolithbeladungen reichen von 5 g/l (Filtervolumen) bei niedrig porösen Substraten (< 50%) bis ca. 50 g/l bei Substraten mit höherer Porosität (> 50%).

Zur Erhöhung der katalytischen Aktivität können die Zeolithe zusätzlich mit Platingruppenmetallen (Platin, Palladium, Rhodium, Iridium) oder mit Übergangsmetallen (zum Beispiel Eisen, Kupfer, Cer) katalytisch aktiviert sein. Zur Aktivierung mit Platingruppenmetallen können die Zeolithe zum Beispiel mit wässrigen Lösungen von löslichen Vorläuferverbindungen imprägniert werden. Nach der Imprägnierung werden die Zeolithe getrocknet, kalziniert und gegebenenfalls reduziert. Die Edelmetallbeladung auf den Zeolithen beträgt bevorzugt zwischen 0,01 und 1 Gew.-%, bezogen auf das Gesamtgewicht von Zeolithen und Platingruppenmetallen. Bevorzugt wird als Platingruppenmetall Platin verwendet, gegebenenfalls in Kombination mit Palladium.

Bei Verwendung von mit Übergangsmetallen ausgetauschten Zeolithen (Eisen, Kupfer und Cer) werden die Zeolithe in der Ammonium- oder Natrium-Form durch Ionenaustausch mit den Übergangsmetallen dotiert. Der Ionenaustausch kann dabei entweder in Lösung oder als sogenannter Festkörperionenaustausch durchgeführt werden. Die Beladung mit Übergangsmetallen beträgt bevorzugt ca. 1 bis 15 Gew.-% bezogen auf das Gesamtgewicht.

Die zweite Beschichtungssuspension kann zusätzlich zu den Zeolithen ein weiteres Katalysatormaterial enthalten, das sowohl bezüglich der katalytisch aktiven Edelmetalle als auch bezüglich der verwendeten Trägermaterialien zu dem Katalysatormaterial der ersten Beschichtungssuspension identisch oder auch verschieden sein kann. Bevorzugt wird hierfür ein Katalysatormaterial mit gleicher Zusammensetzung wie in der ersten Beschichtungssuspension verwendet. Die Zeolithe der zweiten Beschichtungssuspension weisen bevorzugt ein Gewichtsverhältnis zu dem weiteren Katalysatormaterial ein Gewichtsverhältnis von 0,1 bis 10 auf.

Es hat sich gezeigt, daß die Einstellung der Partikeldurchmesser durch Mahlung für Katalysatormaterialien und Zeolithe der zweiten Beschichtungssuspension bevorzugt getrennt erfolgen soll. Katalysatormaterialien und Zeolithe weisen unterschiedliche Härten auf. Nur durch getrenntes Vermahlen kann für beide Materialien eine vergleichbare Partikelgrößenverteilung garantiert werden. Daher werden zur Beschichtung des Wandflußfilters mit der zweiten Beschichtungssuspension bevorzugt zunächst zwei getrennte Suspensionen angesetzt. Die erste Suspension enthält die Trägermaterialien, die mit Edelmetallen (zum Beispiel Platin, Palladium) aktiviert sind. Die zweite Suspension enthält die Zeolithe. Die Zeolithe werden bevorzugt in einem vorgelagerten Prozeßschritt durch Imprägnieren oder Ionenaustausch mit Edelmetall dotiert. Es kann aber auch Edelmetall mit Hilfe geeigneter Vorläuferverbindungen in die Zeolithsuspension gegeben werden. Bei beiden Suspensionen wird dann getrennt durch Mahlen ein mittlerer Partikeldurchmesser d₅₀ kleiner als 2 µm eingestellt; der d₉₀-Wert soll bei maximal 5 bis 6 µm liegen. Direkt vor dem eigentlichen Beschichtungsprozeß werden beide Suspensionen gemischt und homogenisiert.

Das beschriebene Verfahren führt zu einer gestuften Konzentration der katalytisch aktiven Platingruppenmetalle längs des Filters. Im vorderen Teil des Filters, bezogen auf die Strömungsrichtung des Abgases, befinden sich mehr katalytisch aktive Platingruppenmetalle. Dies ist besonders bei motornah angeordneten Dieselpartikelfiltern mit integriertem Oxidationskatalysator vorteilhaft. Die häufig eingesetzten Siliziumkarbid-Filtersubstrate besitzen nämlich eine große thermischen Masse und weisen in den für die Zertifizierung vorgeschriebenen Testzyklen, wie z.B. dem NEDC (= New European Driving Cycle), einen starken axialen Temperaturgradienten auf. So werden insbesondere bei Verwendung längerer Dieselpartikelfilter (> 150 mm) die Temperaturen, die für die Umsetzung von Kohlenmonoxid und Kohlenwasserstoffen erforderlich sind, im stromabwärts angeordneten, hinteren Teil des Filters in der Regel über den gesamten Testzyklus nicht erreicht. Demzufolge würde bei einem gleichmäßig beschichteten Filter ein Teil des Edelmetalls nur wenig oder sogar überhaupt nicht zur Umsetzung von Kohlenmonoxid und Kohlenwasserstoffen beitragen. Aus diesem Grund ist es vorteilhaft, besonders bei motornah angeordneten Filtern die Edelmetalle gestuft über die Länge des Partikelfilters zu verteilen, so daß auf der Anströmseite eine Zone mit höherer Edelmetallbeladung und auf der Ausströmseite ein Bereich mit niedrigerer Edelmetallbeladung vorliegt. Allerdings ist zu vermeiden, daß auf der Filterauslaßseite eine minimale Edelmetall-Konzentration von ca. 0,1 g/l unterschritten wird, da ansonsten bei aktiven Filterregenerationen die Gefahr von sogenannten Sekundäremissionen, d.h. Durchbrüchen von Kohlenmonoxid und Kohlenwasserstoffen besteht.

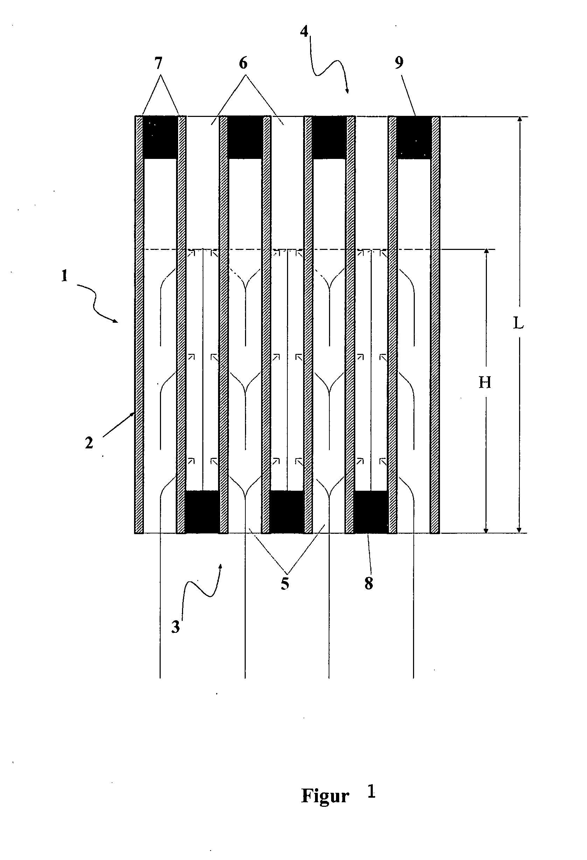

Zur weiteren Erläuterung des beschriebenen Verfahrens dient die einzige Figur. Sie zeigt schematisch einen Längsschnitt durch ein Wandflußfilter (1) in Beschichtungsposition. Das Filter besitzt eine zylindrische Form mit einer Länge L, einer Mantelfläche (2), einer Eintritts-Stirnfläche (3) und einer Austritts-Stirnfläche (4). Das Filter weist über seinen Querschnitt Strömungskanäle (5) und (6) für das Abgas auf, die durch die Kanalwände (7) voneinander getrennt sind. Die Strömungskanäle sind durch gasdichte Stopfen (8) und (9) wechselseitig an der Ein- und Austritts-Stirnfläche verstopft. Die an der Eintrittsseite offenen Strömungskanäle (5) bilden die Eintrittskanäle und die an der Austrittsseite offenen Strömungskanäle (6) bilden die Austrittskanäle für das Abgas. Das zu reinigende Abgas tritt in die Eintrittskanäle des Filters ein und muß zum Durchqueren des Filters von den Eintrittskanälen durch die porösen Kanalwände (7) hindurch in die Austrittskanäle übertreten.

Zur Beschichtung des Wandflußfilters wird es wie in der Figur gezeigt mit seiner Zylinderachse senkrecht ausgerichtet, so daß die Eintritts-Stirnfläche (3) des Filters unten zu liegen kommt. Dann wird die erste Beschichtungssuspension von unten in die Eintrittskanäle (5) bis zur Höhe H eingepumpt. Die Pfeile stellen die Strömung der Suspension dar. Wegen der hohen Porosität des Filtermaterials, der geringen Partikelgröße der Feststoffe der Suspension und ihres geringen Feststoffgehaltes tritt die Beschichtungssuspension durch die Poren der Kanalwände hindurch in die Austrittskanäle. Das hat zur Folge, daß die Beschichtungssuspension beim Einpumpen in den Ein- und Austrittskanälen gleich hoch steht und gemeinsam ansteigt. Hat die Beschichtungssuspension im Filterkörper die gewünschte Höhe H erreicht, wird die Beschichtungssuspension wieder nach unten ausgepumpt oder ausgesaugt. Hierdurch werden die Feststoffe der Beschichtungssuspension im wesentlichen in den Poren der Kanalwände abgeschieden. Auf den geometrischen Oberflächen der Kanalwände verbleiben nur sehr geringe Anteile der Feststoffe.

Nachdem die Feststoffe der ersten Beschichtungssuspension in den Poren der Kanalwände bis zu einer Höhe H abgeschieden sind, wird der Filterkörper um eine Achse senkrecht zur Zylinderachse um 180 ° gedreht, so daß jetzt die Austritts-Stirnfläche (4) unten zu liegen kommt. Dann wird die zweite Beschichtungssuspension wieder von unten in den Filterkörper bis zur vollständigen Füllung (H = L) eingepumpt. Nach Abpumpen dieser zweiten Beschichtungssuspension wird der Filterkörper getrocknet und kalziniert.

Das so hergestellten Wandflußfilter zeigt auch bei einer Beladung mit Zeolithen von mehr als 10 g/l keine Schichtablösungen bei Stoßtests. Darüber hinaus zeigen diese Wandflußfilter keine Nachteile bezüglich katalytischer Aktivität und Abgasgegendruck gegenüber Wandflußfiltern, bei denen beide Beschichtungssuspensionen nur von der Eintrittsseite her in die Filterkörper eingebracht wurden.

## Patentansprüche

1. Verfahren zur Beschichtung eines Dieselpartikelfilters mit einer katalytisch aktiven Beschichtung, wobei eine zeolithhaltige Schicht über die gesamte Länge des Partikelfilters gleichmäßig und ein weiterer, zeolithfreier Edelmetallkatalysator nur in einer Eingangszone zur Erhöhung einer Edelmetallkonzentration in dieser Zone in die Poren des Filtermaterials eingebracht werden und das Dieselpartikelfilter in Form eines zylindrischen Wandflußfilters mit einer Zylinderachse vorliegt, das eine Eintritts-Stirnfläche, eine Austritts-Stirnfläche sowie eine Länge L des Filterkörpers aufweist,
**gekennzeichnet durch** die Verfahrensschritte,
a) senkrechtes Ausrichten der Achse des Filterkörpers mit der Eintritts-Stirnfläche nach unten,
b) Einpumpen einer ersten, zeolithfreien Beschichtungssuspension **durch** die Eintritts-Stirnfläche bis zu einer vorbestimmten Höhe H, und Absaugen der Beschichtungssuspension nach unten,
c) Drehen des Filterkörpers um eine Achse senkrecht zur Zylinderachse um 180 °,
d) Einpumpen einer zweiten, zeolithhaltigen Beschichtungssuspension **durch** die nun unten liegende Austritts-Stirnfläche in das Filtersubstrat bis zur oben liegenden Eintritts-Stirnfläche und Absaugen oder Auspumpen der Beschichtungssuspension nach unten und
e) Trocknen und Kalzinieren der Beschichtung,
wobei beide Beschichtungssuspensionen vor dem Beschichten so fein vermahlen werden, daß die Partikel der Feststoffe einen Durchmesser d₉₀ kleiner als 5 µm und einen Feststoffgehalt von weniger als 25 Gew.-% aufweisen.

2. Verfahren nach Anspruch 1,
**dadurch gekennzeichnet,**
**daß** die erste, zeolithfreie Beschichtungssuspension mit Platin und Palladium katalytisch aktivierte Trägermaterialien enthält, die ausgewählt sind aus der Gruppe bestehend aus Aluminiumoxid, Siliziumdioxid, Titandioxid, Zirkonoxid, Ceroxid und Mischungen oder Mischoxiden davon.

3. Verfahren nach Anspruch 2,
**dadurch gekennzeichnet,**
**daß** die zweite, zeolithhaltige Beschichtungssuspension katalytisch aktivierte Zeolithe enthält, die ausgewählt sind aus der Gruppe bestehend aus Mordenit, Silicalit, Y-Zeolith, ZSM-5 Zeolith und beta-Zeolith oder Mischungen davon.

4. Verfahren nach Anspruch 3,
**dadurch gekennzeichnet,**
**daß** die zweite Beschichtungssuspension zusätzlich mit Platin und Palladium katalytisch aktivierte Trägermaterialien enthält, die ausgewählt sind aus der Gruppe bestehend aus Aluminiumoxid, Siliziumdioxid, Titandioxid, Zirkonoxid, Ceroxid und Mischungen oder Mischoxiden davon, wobei die Zeolithe zu den anderen Trägermaterialien im Gewichtsverhältnis von 0,1 bis 10 stehen.

5. Verfahren nach Anspruch 4,
**dadurch gekennzeichnet,**
**daß** die Zeolithe mit wenigstens einem Platingruppenmetall katalytisch aktiviert sind, wobei die Konzentration der Platingruppenmetalle zwischen 0,01 und 1 Gew.-%, bezogen auf das Gesamtgewicht der Zeolithe, beträgt.

6. Verfahren nach Anspruch 5,
**dadurch gekennzeichnet,**
**daß** beide Beschichtungssuspensionen als Platingruppenmetalle Platin und Palladium im Gewichtsverhältnis zwischen 1 : 10 und 20 : 1 enthalten.

7. Verfahren nach Anspruch 1,
**dadurch gekennzeichnet,**
**daß** das Wandflußfilter aus keramischem Material besteht, dessen Wände eine offenporige Struktur mit einer Porosität zwischen 40 und 80 % und einem mittleren Porendurchmesser zwischen 9 und 30 µm aufweist.

## Claims

1. Method for the coating of a diesel particle filter with a catalytically active coating, a zeolite-containing layer being introduced uniformly over the entire length of the particle filter, and a further, zeolite-free noble metal catalyst being introduced into the pores of the filter material solely in an entry zone in order to increase a noble metal concentration in this zone, and the diesel particle filter being in the form of a cylindrical wall flow filter with a cylinder axis, which has an inlet end face, an outlet end face and a length L of the filter body, **characterized by** the method steps,
a) vertical orientation of the axis of the filter body, with the inlet end face downward,
b) pumping of a first, zeolite-free coating suspension in through the inlet end face up to a predetermined height H, and suction extraction of the coating suspension downward,
c) rotation of the filter body about an axis perpendicular to the cylinder axis through 180°,
d) pumping of a second, zeolite-containing coating suspension in through the then lower outlet end face into the filter substrate as far as the upper inlet end face, and suction extraction or pumping out of the coating suspension downward, and
e) drying and calcining of the coating, both coating suspensions being ground, before coating, so finely that the particles of the solids have a diameter d₉₀ lower than 5 µm and a solid content of less than 25% by weight.

2. Method according to Claim 1, **characterized in that** the first, zeolite-free coating suspension contains carrier materials which are activated catalytically by means of platinum and palladium and which are selected from the group consisting of aluminum oxide, silicon dioxide, titanium dioxide, zirconium oxide, cerium oxide and mixtures or mixed oxides thereof.

3. Method according to Claim 2, **characterized in that** the second, zeolite-containing coating suspension contains catalytically activated zeolites which are selected from the group consisting of mordenite, silicalite, Y-zeolite, ZSM-5 zeolite and beta zeolite or mixtures thereof.

4. Method according to Claim 3, **characterized in that** the second coating suspension additionally contains carrier materials which are activated catalytically by means of platinum and palladium and which are selected from the group consisting of aluminum oxide, silicon dioxide, titanium dioxide, zirconium oxide, cerium oxide and mixtures or mixed oxides thereof, the zeolites being in a weight ratio of 0.1 to 10 to the other carrier materials.

5. Method according to Claim 4, **characterized in that** the zeolites are activated catalytically by means of at least one platinum group metal, the concentration of the platinum group metals amounting to between 0.01 and 1% by weight in relation to the overall weight of the zeolites.

6. Method according to Claim 5, **characterized in that** both coating suspensions contain as platinum group metals platinum and palladium in a weight ratio of between 1:10 and 20:1.

7. Method according to Claim 1, **characterized in that** the wall flow filter consists of ceramic material, the walls of which have an open-pored structure with a porosity of between 40 and 80% and with a mean pore diameter of between 9 and 30 µm.

## Revendications

1. Procédé d'application d'un revêtement sur un filtre à particules diesel avec un revêtement actif catalytiquement, dans lequel on introduit une couche contenant des zéolithes uniformément sur toute la longueur du filtre à particules et un autre catalyseur en métal noble sans zéolithes dans les pores du matériau du filtre uniquement dans une zone d'entrée pour augmenter une concentration en métal noble dans cette zone et le filtre à particules diesel se présente sous la forme d'un filtre cylindrique à écoulement en paroi avec un axe de cylindre, qui présente une face frontale d'entrée, une face frontale de sortie ainsi qu'une longueur L du corps de filtre, **caractérisé par** les étapes suivantes:
a) orientation verticale de l'axe du corps de filtre avec la face frontale d'entrée vers le bas,
b) pompage entrant d'une première suspension de revêtement sans zéolithes à travers la face frontale d'entrée jusqu'à une hauteur prédéterminée H, et aspiration de la suspension de revêtement vers le bas,
c) rotation de 180° du corps de filtre autour d'un axe perpendiculaire à l'axe de cylindre,
d) pompage entrant d'une deuxième suspension de revêtement contenant des zéolithes à travers la face frontale de sortie tournée vers le bas dans le substrat du filtre jusqu'à la face frontale d'entrée située en haut et aspiration ou pompage sortant de la suspension de revêtement vers le bas, et
e) séchage et calcination du revêtement,
dans lequel les deux suspensions de revêtement sont moulues si finement, avant le revêtement, que les particules des matières solides présentent un diamètre d₉₀ inférieur à 5 µm et une teneur en matières solides de moins de 25 % en poids.

2. Procédé selon la revendication 1, **caractérisé en ce que** la première suspension de revêtement sans zéolithes contient des matériaux de support activés catalytiquement au platine et au palladium, qui sont sélectionnés dans le groupe composé de l'oxyde d'aluminium, du dioxyde de silicium, du dioxyde de titane, de l'oxyde de zirconium, de l'oxyde de cérium et de mélanges ou d'oxydes mixtes de ceux-ci.

3. Procédé selon la revendication 2, **caractérisé en ce que** la deuxième suspension de revêtement contenant des zéolithes contient des zéolithes catalytiquement activées, qui sont sélectionnées dans le groupe composé de mordénite, silicalite, zéolithe Y, zéolithe ZSM-5 et bêta-zéolithe ou de mélanges de celles-ci.

4. Procédé selon la revendication 3, **caractérisé en ce que** la deuxième suspension de revêtement contient en outre des matériaux de support activés catalytiquement au platine et au palladium, qui sont sélectionnés dans le groupe composé de l'oxyde d'aluminium, du dioxyde de silicium, du dioxyde de titane, de l'oxyde de zirconium, de l'oxyde de cérium et de mélanges ou d'oxydes mixtes de ceux-ci, dans lequel les zéolithes se trouvent dans un rapport pondéral de 0,1 à 10 par rapport aux autres matériaux de support.

5. Procédé selon la revendication 4, **caractérisé en ce que** les zéolithes sont activées catalytiquement avec au moins un métal du groupe du platine, dans lequel la concentration des métaux du groupe du platine vaut de 0,01 à 1 % en poids, rapportée au poids total des zéolithes.

6. Procédé selon la revendication 5, **caractérisé en ce que** les deux suspensions de revêtement contiennent, comme métaux du groupe du platine, du platine et du palladium dans un rapport pondéral compris entre 1:10 et 20:1.

7. Procédé selon la revendication 1, **caractérisé en ce que** le filtre à écoulement en paroi se compose de matériau céramique, dont les parois présentent une structure à pores ouverts avec une porosité comprise entre 40 et 80 % et un diamètre moyen de pore compris entre 9 et 30 µm.
